# EUROPÄISCHE PATENTSCHRIFT

(11) **EP 0 822 693 B1**
(45) Veröffentlichungstag und Bekanntmachung des Hinweises auf die Patenterteilung: **09.03.2005**
(21) Anmeldenummer: 97112591.9
(22) Anmeldetag: 23.07.1997
(51) Int. Cl.: H04M 1/60, B60R 11/02

(54) **Freisprecheinrichtung für Telefone in Kraftfahrzeugen**
Hands-free equipment for telephones in motor vehicles
Dispositif mains-libres pour téléphones dans des véhicules automobiles

(30) Priorität: 03.08.1996 DE 19631444
(43) Veröffentlichungstag der Anmeldung: 04.02.1998
(73) Patentinhaber: Bury, Henryk, Dipl.-Ing., 32584 Löhne-Witte (DE)
(72) Erfinder: Bury, Henryk, Dipl.-Ing., 32584 Löhne-Witte (DE)

(56) Entgegenhaltungen:
- EP-A- 0 617 535
- US-A- 5 282 246
- US-A- 5 535 274
- PATENT ABSTRACTS OF JAPAN vol. 1995, no. 08, 29. September 1995 (1995-09-29) & JP 07 135521 A (FUJITSU TEN LTD), 23. Mai 1995 (1995-05-23)

## Beschreibung

Die Erfindung betrifft eine Freisprecheinrichtung für Telefone in Kraftfahrzeugen. mit einem im Kraftfahrzeug befestigbaren Gehäuse.

Kraftfahrzeuge und vor allem Personenwagen sind vielfach mit einem Telefon mit einer Freisprecheinrichtung ausgerüstet. Die Freisprecheinrichtung ermöglicht es, während der Fahrt ein Telefongespräch zu führen, ohne daß das Telefon zu diesem Zweck aus einem Telefonhalter genommen und gehalten werden muß. Der Fahrer des Fahrzeugs hat beim Telefonieren weiterhin beide Hände zum Steuern seines Fahrzeugs zur Verfügung, so daß er in einer Gefahrensituation schnell reagieren kann.

Dokument EP-A-0 617 535, welches den nächstliegenden Stand der Technik repräsentiert, offenbart eine Montageanordnung für ein Mobiltelefon, die einen Korpus und einen darin angebrachten Lautsprecher zur freihändigen Benutzung des Telefons umfaßt. Ein Halter, der lösbar an dem Korpus angebracht ist, ist dazu vorgesehen, das Telefon lösbar aufzunehmen. Der Korpus umfaßt eine Ausnehmung zur Aufnahme und Befestigung eines Teils des Halters.

Ferner offenbart die Druckschrift US-A-5.282.246 einen Telefonhalter zur Aufnahme verschiedener Arten von Mobiltelefonen, der eine freihändige Benutzung ermöglicht. Durch einen federnd vorgespannten Auszug, der das eingesetzte Mobiltelefon an einem Ende umfaßt, ist es möglich, Geräte unterschiedlicher Grössen in dem Halter aufnehmen zu können.

Bei der Montage der Freisprecheinrichtung und des Telefons treten vielfach Platzprobleme auf, so daß sich die Anordnung beider Geräte an einer zum Fahrer günstigen Position als schwierig gestaltet und einen erheblichen Montageaufwand erfordert.

Der Erfindung liegt die Aufgabe zugrunde, eine Freisprecheinrichtung zu schaffen, die den Montageaufwand minimiert.

Diese Aufgabe wird erfindungsgemäß durch eine Freisprecheinrichtung mit den Merkmalen des Anspruchs 1 gelöst.

Mit der erfindungsgemäßen Freisprecheinrichtung kann der Montageaufwand reduziert werden, da nur die Freisprecheinrichtung an einer zum Fahrer günstigen Position, beispielsweise am Armaturenbrett, befestigt werden muß. Anschließend wird der Telefonhalter mit der Freisprecheinrichtung in Eingriff gebracht. Zum einen haben beide Geräte eine in bezug auf den Fahrer günstige Position, und zum anderen sind beide Geräte ohne großen Aufwand elektrisch miteinander zuverbinden.

Erfindungsgemäß weist die vom Armaturenbrett oder einer Konsole abgewandte Seite des Gehäuses der Freisprecheinrichtung eine Vertiefung auf, deren Boden eine mit dem Telefonhalter zusammenwirkende Aufnahmefläche bildet. An gegenüberliegenden Rändern der Aufnahmefläche sind einander zugewandte Vorsprünge angeordnet, die zusammen mit der Aufnahmefläche die Verbindungseinrichtung der Freisprecheinrichtung darstellt. Die Vorsprünge der Freisprecheinrichtung korrespondieren mit Vorsprüngen, die auf der dem Armaturenbrett oder der Konsole zugewandten Seite des Telefonhalters angeordnet sind und die Verbindungseinrichtung des Telefonhalters bilden. Einer der Vorsprünge der Freisprecheinrichtung ist auf einem federnd in Richtung des anderen bis gegen einen Anschlag vorgespannten Gleitstück angeordnet, so daß beide Geräte in Eingriff gebracht und wieder voneinander gelöst werden können. Der Telefonhalter wird mit der Freisprecheinrichtung in Eingriff gebracht, indem der Benutzer zunächst unter leichter Verkantung des Telefonhalters nur den Vorsprung des Telefonhalters auf der Seite des federnd verschiebbaren Gleitstücks des Gehäuses der Freisprecheinrichtung in Eingriff bringt. Er drückt diesen Vorsprung mit dem Gleitstück entgegen der Federwirkung leicht zurück und legt den Telefonhalter sodann gegen das Gehäuse und führt den formschlüssigen Eingriff auf der anderen Seite herbei. Durch die Federwirkung werden die formschlüssigen Eingriffe auf beiden Seiten zuverlässig hergestellt und beibehalten. Beim Entnehmen des Telefonhalters muß zunächst nur wiederum Druck entgegen der federnden Vorspannung ausgeübt und sodann zunächst der eine und dann der zweite formschlüssige Eingriff gelöst werden.

Die dem Armaturenbrett oder der Mittelkonsole zugewandte Seite des Gehäuses der Freisprecheinrichtung ist ebenfalls mit Vorsprüngen versehen, so daß es mit einer am Armaturenbrett befestigten Halterung in Eingriff gebracht werden und zusammen mit dem Telefonhalter und dem Telefon aus dem Fahrzeug entnommen werden kann. Die Halterung ist von der Handhabung vorzugsweise ebenso ausgeführt wie die Aufnahme für den Telefonhalter, mit der Ausnahme, daß die Bewegungsrichtung des Gleitstücks eine andere ist als die am Gehäuse der Freisprecheinrichtung, so daß eine gleichzeitige, nicht beabsichtigte Entnahme des Telefonhalters und der Freisprecheinrichtung vermieden wird.

Im Gehäuse der Freisprecheinrichtung sind vorzugsweise sowohl ein Lautsprecher zur Wiedergabe des vom Telefonteilnehmer Gesprochenen als auch ein Mikrofon zur Erfassung des im Fahrzeug Gesprochenen untergebracht, so daß bei der Entnahme der Freisprecheinrichtung und des Telefonhalters die Telefonanlage vollständig ist und ohne großen Aufwand in ein anderes Fahrzeug übernommen werden kann. Es muß dazu nur ein Anschluß gelöst werden, der die Freisprecheinrichtung und den Telefonhalter bzw. das Telefon mit einer Stromquelle, einer Antenne etc. verbindet.

Im folgenden werden bevorzugte Ausführungsbeispiele der Erfindung anhand der beigefügten Zeichnung näher erläutert.
- Fig. 1: ist eine Explosionsdarstellung einer erfindungsgemäßen Freisprecheinrichtung:
- Fig. 2: zeigt eine perspektivische Gesamtansicht der Freisprecheinrichtung gemäß Fig. 1;
- Fig. 3: ist eine perspektivische Gesamtansicht der Freisprecheinrichtung und eines Telefonhalters mit einem Telefon;
- Fig. 4: ist eine perspektivische Darstellung und zeigt die Freisprecheinrichtung mit einer Halterung.

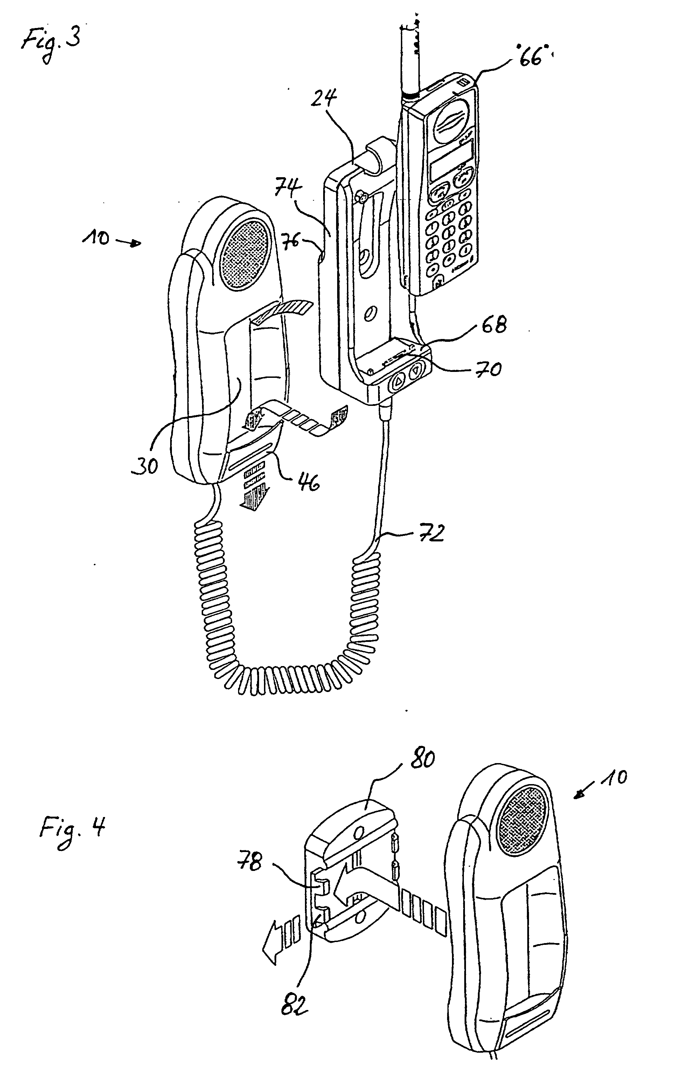

Die in der Beschreibung verwendeten Angaben wie "oben" und "unten" beziehen auf die in Fig. 3 und 4 gezeigte Stellung, in der die Freisprecheinrichtung üblicherweise montiert ist.

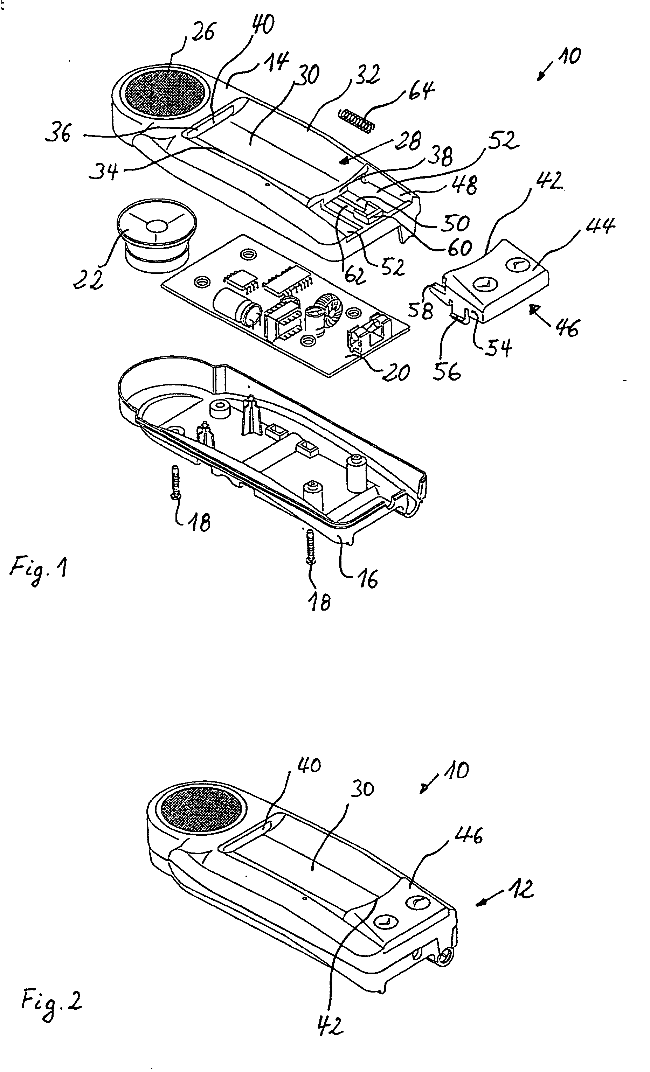

Fig. 1 und 2 zeigen den prinzipiellen Aufbau einer erfindungsgemäßen Freisprecheinrichtung, die mit 10 bezeichnet ist. Die Freisprecheinrichtung weist ein etwa quaderförmiges, beispielsweise aus Kunststoff bestehendes Gehäuse 12 auf. Das Gehäuse setzt sich aus einem Oberteil 14 und einem Unterteil 16 zusammen, die durch Schrauben 18 miteinander verbunden sind. Das Gehäuses 12 dient der Aufnahme einer mit elektronischen Bauelementen bestückten Platine sowie eines Lautsprechers, der während eines Telefongesprächs das vom Gesprächsteilnehmer Gesprochene wiedergibt. Ferner ist ein in der Zeichnung nicht dargestelltes Mikrofon zur Erfassung des während des Telefongesprächs im Fahrzeug Gesprochenen im Gehäuse 12 untergebracht. so daß die Komponenten der Freisprecheinrichtung im Gehäuse zusammengefaßt sind. Auf diese Weise wird der Montageaufwand gering gehalten.

Gemäß Fig. 2 ist auf der dem Betrachter zugewandten kleinen Seitenfläche des Gehäuses ein nach außen geführter Antennenanschluß angeordnet, so daß eine Verbindung der Freisprecheinrichtung 10 mit einer nicht gezeigten Außenantenne erfolgen kann. Ein weiterer in der Zeichnung nicht dargestellter Anschluß zur Stromversorgung sowie ein Anschluß zur Versorgung eines in Fig. 3 und 4 gezeigten Telefonhalters 24 sind an der Freisprecheinrichtung 10 vorgesehen.

Das Oberteil 14 des Gehäuses 12 weist unterhalb einer im oberen Bereich beispielsweise mit einem Schutzgitter 26 abgedeckten Öffnung für den Lautsprecher 22 eine flache, sich längs des Oberteils erstreckende Vertiefung auf, deren Boden eine Aufnahmefläche 30 bildet, die begrenzt wird durch zwei längere Seitenwände 32,34 sowie eine obere und untere Seitenwand 36,38. Die Vertiefung dient der Aufnahme des Telefonhalters 24 und weist zu diesem Zweck einen Vorsprung 40 auf, der gebildet wird durch die schräg Anordnung der oberen Seitenwand 36 in Richtung des Schutzgitters 26, so daß die Aufnahmefläche 30 eine größere Fläche aufweist als die Öffnungsfläche der Vertiefung 28. Die in Fig. 1 gezeigte, in bezug auf die Aufnahmefläche der Vertiefung etwa senkrecht angeordnete untere Seitenwand 38 ist niedriger als die anderen Seitenwände 32,34,36 der Vertiefung 28 und wird von einem dem Vorsprung 40 zugewandten Vorsprung 42 überdeckt, der von dem Rand der Oberseite 44 eines unterhalb der Vertiefung 28 angeordneten Gleitstücks 46 vorspringt.

Wie in Fig. 1 gezeigt ist, ist das Gleitstück 46 in einer Aussparung 48 angeordnet, deren Breite im wesentlichen mit der der Vertiefung übereinstimmt. Die Aussparung 48 weist eine längs verlaufende und senkrecht zur unteren Seitenfläche 38 angeordnete Stegfläche 50 auf, die zwei Öffnungen 52 begrenzt. Das hohl ausgebildete Gleitstück 46 weist an den Seitenflächen 54 entsprechende, in die Öffnungen 52 eingreifende Hacken 56 auf, die sich an den Außenrändern der Öffnungen 52 abstützen. Das Gleitstück weist an den Seitenflächen 54 ferner Vorsprünge 58 auf, die der unteren Seitenfläche 38 der Vertiefung 28 zugewandt sind und unter die Aufnahmefläche 30 greifen, so daß das Gleitstück abstützt wird, wenn es in die Aussparung eingesetzt ist.

Die Stegfläche 50 weist einen Anschlag 60 in Form eines liegenden U und eine in Längsrichtung der Stegfläche ausgebildete Rille 62 auf, in die eine Feder 64 eingesetzt ist, die in Fig. 1 rechts neben dem Oberteil 14 dargestellt ist und sich innerhalb des Gleitstücks 46 befindet, wenn das Gleitstück in der Aussparung eingesetzt ist. Die Feder 64 wird gespannt, wenn das Gleitstück 46 vom gegenüberliegenden Vorsprung 40 weg bewegt wird.

Im folgenden soll auf die Funktion der beiden einander zugewandten Vorsprünge 40 und 42 eingegangen werden.

Fig. 3 zeigt die Freisprecheinrichtung 10 in einer montierten Stellung und den Telefonhalter 24 zur Aufnahme eines tragbaren Telefons 66. Der vereinfacht ausgedrückt L-förmige Telefonhalter weist auf der Oberseite des waagerechten Schenkels 68 einen Steckanschluß 70 auf, durch den unter anderem das Telefon mit Strom versorgt wird. Der Steckanschluß 70 ist über eine Verbindungsleitung 72 mit der Freisprecheinrichtung 10 verbunden. Die vom Betrachter in Fig. 3 abgewandte Seite des senkrechten Schenkels 74 ist mit zwei mit den Vorsprüngen 40,42 der Freisprecheinrichtung zusammenwirkenden Vorsprüngen 76 versehen, von denen in Fig. 3 nur der obere Vorsprung zu sehen ist.

Der Telefonhalter 24 wird mit der Freisprecheinrichtung 10 in Eingriff gebracht, indem der Benutzer zunächst unter leichter Verkantung des Telefonhalters nur den Vorsprung 42 des Telefonhalters auf der Seite des federnd verschiebbaren Gleitstücks 46 des Gehäuses 12 der Freisprecheinrichtung 10 in Eingriff bringt, wie es durch den unteren Pfeil veranschaulicht wird. Er drückt diesen Vorsprung mit dem Gleitstück entgegen der Federwirkung leicht zurück und legt den Telefonhalter sodann gegen das Gehäuse 12 und führt den formschlüssigen Eingriff mit dem Vorsprung 40 auf der anderen Seite herbei, wie es durch den oberen Pfeil veranschaulicht wird. Durch die Federwirkung werden die formschlüssigen Eingriffe auf beiden Seiten zuverlässig hergestellt und beibehalten. Beim Entnehmen des Telefonhalters 24 muß zunächst nur wiederum Druck entgegen der federnden Vorspannung ausgeübt und sodann zunächst der eine und dann der zweite formschlüssige Eingriff gelöst werden.

Fig. 4 zeigt eine weitere Ausführungsform der erfindungsgemäßen Freisprecheinrichtung 10, bei der die dem Armaturenbrett oder einer Konsole zugewandte Seite des Unterteils 16 des Gehäuses 12 mit in der Zeichnung nicht sichtbaren Vorsprüngen versehen ist. Die Vorsprünge wirken mit hakenförmigen Vorsprüngen 78 zusammen, die auf einer am Armaturenbrett oder einer Konsole befestigbaren Halterung 80 vorgesehen sind. Die auf der flachen, im Umriß etwa rechteckigen Halterung 80 vorgesehenen Vorsprünge 78 sind einander zugewandt, und zwei der vier Vorsprünge sind auf einem Gleitstück 82 angeordnet, so daß die Freisprecheinrichtung 10 mit der Halterung 80 in Eingriff gebracht und wieder von ihr getrennt werden kann. Die Funktionsweise des Gleitstücks 82 stimmt mit der des Gleitstücks 46 der Freisprecheinrichtung überein, auch wenn die in Fig. 4 durch Pfeile dargestellte Bewegungsrichtung des Gleitstücks 82 eine andere ist, als die des auf der Freisprecheinrichtung angeordneten Gleitstücks 46. Das Gleitstück 82 der Halterung 80 kann nur in waagerechter Richtung bewegt werden, während das Gleitstück 46 der Freisprecheinrichtung 10 nur senkrechter Richtung bewegbar ist. Die unterschiedlichen Bewegungsrichtungen haben den Vorteil, daß zum Beispiel bei der Herausnahme des Telefonhalters 24 aus der Aufnahme der Freisprecheinrichtung die Freisprecheinrichtung dabei die Position selbst beibehält. Sollen beide Geräte, das heißt, die Freisprecheinrichtung und der Telefonhalter, aus dem Fahrzeug herausgenommen werden, so reicht es aus, die zum Lösen der Freisprecheinrichtung notwendige Bewegung auszuführen.

Die in dieser Beschreibung erläuterten Verbindungseinrichtungen zum lösbaren Befestigen des Telefonhalters an der Freisprecheinrichtung einerseits und der Freisprecheinrichtung an der Halterung andererseits können durch andere geeignete Einrichtungen, die eine formschlüssige Verbindung herstellen, ersetzt werden.

Der hier verwendete Begriff der Vorsprünge zur Herstellung einer formschlüssigen Verbindung ist im weitesten Sinne zu verstehen.

Die in der Zeichnung dargestellte Ausführungsform besitzt zwei lösbare Verbindungen, nämlich diejenige zwischen dem Telefonhalter und der Freisprecheinrichtung und zum anderen diejenige zwischen der Freisprecheinrichtung und einer im Fahrzeug zu befestigenden Halterung. Die beiden lösbaren Verbindungseinrichtungen sind auch für sich allein sinnvoll, so daß vor allem die Art der Verbindung zwischen der Freisprecheinrichtung und der karosseriefesten Halterung im Rahmen der vorliegenden Anmeldung von selbständiger Bedeutung ist.

## Patentansprüche

1. Freisprecheinrichtung für Telefone in Kraftfahrzeugen, mit einem im Kraftfahrzeug befestigbaren Gehäuse (12) zur Aufnahme eines Telefonhalters (24), welches Gehäuse (12) und welcher Telefonhalter (24) zusammenwirkende, lösbare Verbindungseinrichtungen zum Anbringen des Telefonhalters (24) an dem Gehäuse (12) aufweisen, **dadurch gekennzeichnet, daß** das Gehäuse (12) zur lösbaren Befestigung des Telefonhalters (24) eine mit dem Telefonhalter (24) zusammenwirkende Aufnahmefläche (30) aufweist, die an gegenüberliegenden Rändern mit einander zugewandten, mit Vorsprüngen (76) des Telefonhalters (24) korrespondierenden Vorsprüngen (40,42) versehen ist, von denen einer auf einem federnd in Richtung des anderen bis gegen einen Anschlag vorgespannten ersten Gleitstück (46) angeordnet ist, und daß die dem Armaturenbrett oder einer Konsole zugewandte Seite des Gehäuses (12) Vorsprünge aufweist, die mit Vorsprüngen (78) einer am Armaturenbrett oder der Konsole befestigbaren Halterung (80) lösbar in Eingriff bringbar sind. von welchen Vorsprüngen (78) ein Teil auf einem zweiten Gleitstück (82) angeordnet ist, dessen Bewegungsrichtung senkrecht zu der Bewegungsrichtung des ersten Gleitstücks (46) steht.

2. Freisprecheinrichtung nach Anspruch 1, **dadurch gekennzeichnet, daß** die Aufnahmefläche (30) für den Telefonhalter (24) der Boden einer im Oberteil (14) des Gehäuses (12) ausgebildeten Vertiefung (28) ist.

3. Freisprecheinrichtung nach Anspruch 1, **dadurch gekennzeichnet, daß** der Vorsprung (40) gebildet wird durch die schräge Anordnung einer die Vertiefung (28) umgebenen Seitenwand (36).

4. Freisprecheinrichtung nach einem der vorherigen Ansprüche, dadurch gekenazeichnet, daß innerhalb des Gehäuses (12) ein Lautsprecher (22) und ein Mikrofon angeordnet sind.

## Claims

1. Hands-free equipment for telephones in motor vehicles, having a housing (12) which can be fastened in the motor vehicle and is intended for receiving a telephone holder (24), which housing (12) and which telephone holder (24) have interacting, releasable connecting devices for attaching the telephone holder (24) to the housing (12), **characterized in that** the housing (12) has, for the releasable fastening of the telephone holder (24), a receiving surface (30) which interacts with the telephone holder (24) and, on opposite edges, is provided with mutually facing projections (40, 42) which correspond to projections (76) of the telephone holder (24) and of which one is arranged on a first slider (46) which is prestressed resiliently in the direction of the other as far as a stop, and **in that** that side of the housing (12) which faces the dashboard or a console has projections which can be brought releasably into engagement with projections (78) of a securing means (80) which can be fastened to the dashboard or the console, one part of which projections (78) is arranged on a second slider (82), the direction of movement of which is perpendicular to the direction of movement of the first slider (46).

2. Hands-free equipment according to Claim 1, **characterized in that** the receiving surface (30) for the telephone holder (24) is the bottom of a depression (28) formed in the upper part (14) of the housing (12).

3. Hands-free equipment according to Claim 1, **characterized in that** the projection (40) is formed by the oblique arrangement of a side wall (36) surrounding the depression (28).

4. Hands-free equipment according to one of the preceding claims, **characterized in that** a speaker (22) and a microphone are arranged within the housing (12).

## Revendications

1. Dispositif mains-libres pour téléphones dans des véhicules automobiles, comprenant un boîtier (12) pouvant être fixé dans le véhicule automobile, pour recevoir un support de téléphone (24), ce boîtier (12) et ce support de téléphone (24) comprenant des moyens de liaison coopérant ensemble et amovibles pour fixer le support de téléphone (24) au boîtier (12), **caractérisé en ce que** le boîtier (12) comprend, pour fixer de façon amovible le support de téléphone (24), une surface de réception (30) coopérant avec lui, qui présente sur des bords opposés des protubérances (40, 42) dirigées l'une vers l'autre, correspondant à des protubérances (76) du support du téléphone (24), l'une des protubérances (40, 42) étant disposée sur une première pièce de glissement (46) précontrainte par un ressort dans la direction de l'autre protubérance jusqu'à une butée et que le côté du boîtier (12) dirigé vers le tableau de bord ou la console présente des protubérances pouvant venir en prise de façon amovible avec des protubérances (78) d'un support (80) pouvant être fixé au tableau de bord ou à la console, une partie de ces protubérances (78) étant disposée sur une seconde pièce de glissement (82) dont la direction de déplacement est perpendiculaire à la direction de déplacement de la première pièce de glissement (46).

2. Dispositif mains-libres selon la revendication 1, **caractérisé en ce que** la surface de réception (30) pour le support de téléphone (24) est le fond d'un évidement (28) réalisé dans là partie supérieure (14) du boîtier (12).

3. Dispositif mains-libres selon la revendication 1, **caractérisé en ce que** la protubérance (40) est réalisée par la disposition inclinée de la paroi latérale (36) qui entoure l'évidement (28).

4. Dispositif mains-libres selon l'une des revendications précédentes, **caractérisé en ce que** à l'intérieur du boîtier (12) sont disposés un haut-parleur (22) et un microphone.
